# FASCICULE DE BREVET EUROPEEN

(11) **EP 1 813 088 B1**
(45) Date de publication et mention de la délivrance du brevet: **08.09.2010**
(21) Numéro de dépôt: 05800607.3
(22) Date de dépôt: 28.09.2005
(51) Int. Cl.: H04L 29/12

(54) **PROCEDE ET SYSTEME DE ROUTAGE DANS LES RESEAUX DE COMMUNICATIONS ENTRE UN PREMIER NOEUD ET UN SECOND NOEUD**
VERFAHREN UND SYSTEM ZUM ROUTEN IN KOMMUNIKATIONSNETZEN ZWISCHEN EINEM ERSTEN KNOTEN UND EINEM ZWEITEN KNOTEN
METHOD AND SYSTEM FOR ROUTING IN COMMUNICATION NETWORKS BETWEEN A FIRST NODE AND A SECOND NODE

(30) Priorité: 30.09.2004 FR 0410366
(43) Date de publication de la demande: 01.08.2007
(73) Titulaire: FRANCE TELECOM, 75015 Paris (FR)
(72) Inventeur: DELESALLE, Christophe, F-22700 Perros-Guirec (FR); BOUGANT, François, F-22300 Lannion (FR); SALAUN, Mickaël, F-29200 Brest (FR); GOURDON, Julie, F-92130 Issy les Moulineaux (FR)
(74) Mandataire: Joly, Jean-Jacques
(86) Numéro de dépôt international: PCT/FR2005/050791
(87) Numéro de publication internationale: WO 2006/035187

(56) Documents cités:
- US-A- 6 098 108
- US-A1- 2002 133 473
- US-A1- 2003 118 002
- US-B1- 6 513 061

## Description

### Domaine technique de l'invention

L'invention se rapporte au domaine de transmission d'informations entre un premier noeud et un second noeud connectés entre eux au moyen de réseaux de télécommunications et en particulier des réseaux de données IP. L'invention peut être appliquée dans le domaine du comptage et de la facturation de services sur Internet.

### Arrière-plan de l'invention

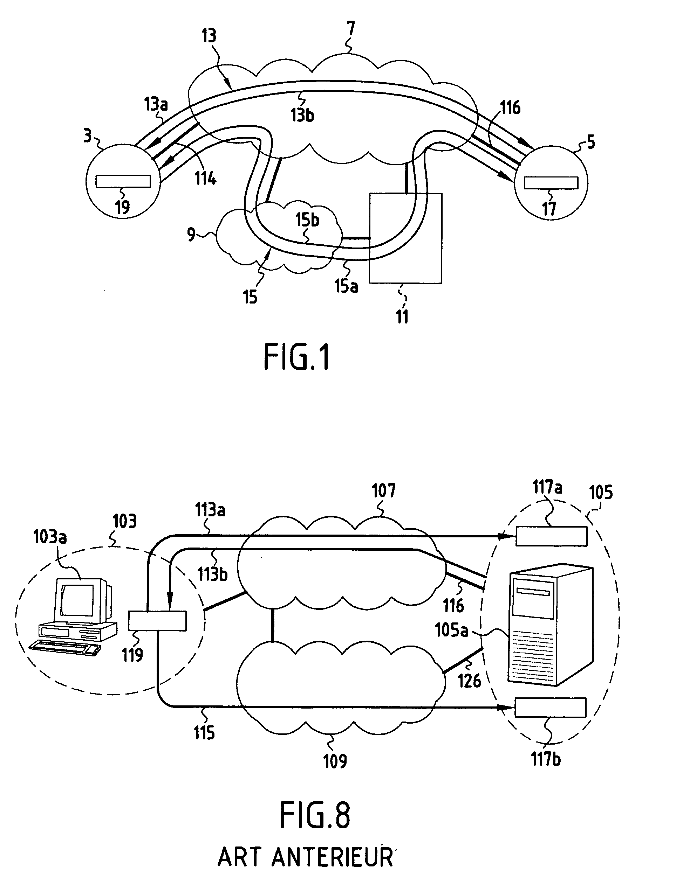

La figure 8 montre un système de transmission d'informations entre un premier noeud 103 correspondant à un client 103a et un second noeud 105 correspondant à un serveur 105a selon l'art antérieur. Les client 103a et serveur 105a sont connectés entre eux au moyen de réseaux de communications 107 et 109.

La technique antérieure consiste à configurer le serveur 105a afin qu'il fournisse des services sous plusieurs adresses réseaux différentes.

En effet, le client 103a envoie des données au serveur 105a selon deux adresses différentes 117a et 117b correspondant à deux URL différentes.

Les flux ou données sont séparés selon deux chemins 113a et 115 et envoyés sur des interfaces physiques ou logiques différentes jusqu'au serveur 105a. Dans ce cas, le serveur 105a possède autant de connexions logiques aux réseaux 107 et 109 qu'il possède d'adresses différentes 117a et 117b.

Le fait que le serveur 105a possède plusieurs adresses 117a et 117b dans les réseaux 107, 109 auquel il est connecté, constitue un inconvénient majeur surtout lorsqu'il est connecté au réseau global Internet à cause de la pénurie d'adresses IP publiques.

En outre, la double connexion du serveur 105a aux réseaux est liée au type d'accès utilisé par ce serveur 105a et dépend de la capacité de ce type d'accès à supporter deux connexions IP simultanées. Si le type d'accès utilisé ne supporte pas la double connexion (par exemple RTC), ou si l'opérateur d'accès ne le permet pas (par exemple pour des accès non professionnels), le serveur 105a doit être connecté aux réseaux 107 et 109 par deux connexions physiques distinctes 116 et 126.

Par ailleurs, les données envoyées par le serveur 105a au client 103a selon les chemins 113a et 115 reviennent toujours par le même chemin 113b car, par définition dans le protocole IP, le serveur 105a utilise le même chemin 113b pour router les données à destination d'un même client 103a disposant d'une seule adresse 119. Les flux de données sont donc asymétriques sur chacun des chemins ou liens, ce qui limite leur analyse (par exemple statistiques, contrôle de qualité, gestion de bande passante) au niveau applicatif.

Le document US 6 098 108 décrit un procédé de communication entre un client et un serveur, dans lequel le client accède à des informations pour déterminer si un chemin de communication amélioré existe jusqu'au serveur, et le cas échéant communique avec le serveur selon ce chemin de communication amélioré.

Le document US 6 513 061 décrit un serveur de sélection d'un serveur proxy parmi une pluralité de serveurs proxy relayant un accès entre un client et un serveur, en fonction d'informations de localisation géographique du client et du serveur proxy.

Le document US 2003/0118002 décrit des procédés d'établissement de connexions téléphoniques entre deux domaines d'adresses présentant des espaces d'adresses communs.

Le document US 2002/0133473 décrit un système et un procédé fournissant un service prioritaire sur un réseau informatique à la demande d'un utilisateur.

### Objet et résumé de l'invention

L'invention a pour but de remédier à ces inconvénients, et de simplifier la connexion du serveur aux réseaux de communications.

Un autre but est de distinguer des flux applicatifs (par exemple payants) entre un client et un serveur connectés à Internet afin de permettre leur valorisation et éventuellement leur facturation.

Ces buts sont atteints grâce à un procédé de transmission de données entre un premier noeud et un deuxième noeud connectés entre eux au moyen de réseaux de communications, les premier et second noeuds correspondant à un terminal et un serveur d'un ensemble client-serveur. Conformément à l'invention, le serveur propose au moins un premier et un second services, et :
- lorsque le terminal client accède au premier service, le terminal client envoie des données au serveur selon une première adresse ; et
- lorsque le terminal client accède au second service, le terminal client envoie des données au serveur selon une seconde adresse ;
les données envoyées selon la première adresse et les données envoyées selon la seconde adresse empruntant deux chemins différents vers une adresse réseau unique du serveur et la seconde adresse cachant ladite adresse réseau unique dudit serveur au terminal client.

En ayant qu'une seule et unique adresse, il suffit au second noeud d'avoir une seule et simple connexion aux réseaux. Ainsi, tout en proposant plusieurs services, il est suffisant pour un serveur d'avoir une seule ligne physique pour l'accès à un réseau de télécommunications et en particulier à un réseau public Internet.

En outre, le fait que les données sont routées sur deux chemins différents permet de distinguer ces données afin de valoriser par exemple celles qui passent par un des deux chemins.

Selon un aspect de l'invention, l'une desdites deux adresses correspond à l'adresse réseau unique du second noeud, l'autre adresse correspondant à une adresse attribuée à un routeur proxy connecté aux premier et second noeuds de sorte qu'un des deux chemins passe par le routeur proxy.

Avantageusement, l'adresse attribuée au routeur proxy est échangée avec l'adresse unique du second noeud selon une fonction de NAT/PAT statique et/ou dynamique.

Selon un autre aspect de l'invention, les données envoyées du premier noeud au second noeud empruntent un même chemin que celles envoyées du second noeud au premier noeud.

Selon encore un autre aspect de l'invention, l'adresse attribuée au routeur proxy est échangée avec une adresse unique d'un serveur parmi une pluralité de serveurs selon une fonction de NAT/PAT applicative permettant de partager le routeur proxy par la pluralité de serveurs.

Avantageusement, les données échangées entre les premier et second noeuds correspondant au terminal et au serveur de l'ensemble client-serveur et empruntant le chemin passant par le routeur proxy sont en outre analysées selon une fonction de comptage applicative permettant ainsi de valoriser lesdites données.

Selon un autre aspect de l'invention, l'accès au second service n'est autorisé qu'aux trames IP en provenance du routeur proxy.

L'invention vise également un système de transmission de données entre un premier noeud et un deuxième noeud connectés entre eux au moyen de réseaux de communications, les premier et second noeuds correspondant à un terminal et un serveur d'un ensemble client-serveur. Conformément à l'invention, le système de transmission est tel que :
- le serveur comprend des moyens pour proposer au moins un premier service et un second services ;
- le terminal client comprend :
   o des moyens pour accéder au premier service ;
   o des moyens pour accéder au second service ;
   o des moyens pour envoyer des données au serveur selon une première adresse lorsque ledit terminal client accède au premier service ; et
   o des moyens pour envoyer des données au serveur selon une seconde adresse lorsque le terminal client accède au second service ;
et en ce qu'il comporte un dispositif de routage permettant aux données envoyées selon la première adresse et aux données envoyées selon la seconde adresse d'être reçues sur une adresse réseau unique du serveur en empruntant deux chemins différents, l'adresse réseau unique du serveur étant cachée au terminal client par la seconde adresse.

Le moyen de routage du système de transmission comprend un routeur proxy connecté aux premier et second noeuds de manière en ce que l'une desdites deux adresses correspond à une adresse attribuée au routeur proxy de sorte qu'un des deux chemins passe par le routeur proxy, l'autre adresse étant ladite adresse réseau unique du second noeud.

Avantageusement le moyen de routage comprend un moyen de comptage applicatif destiné à analyser les données échangées entre les premier et second noeuds correspondant à un terminal et à un serveur d'un ensemble client-serveur et empruntant le chemin passant par le routeur proxy permettant ainsi de valoriser lesdites données.

Le système de transmission de données comprend en outre un centre de gestion destiné à recevoir des informations depuis le moyen de comptage concernant les données passant par le routeur proxy afin de valoriser ces données et facturer en conséquence un client de l'ensemble client-serveur.

Le moyen de routage comprend en outre un routeur d'aiguillage destiné à aiguiller les flux de données entre les réseaux de communications en fonction des adresses de destination.

Le système de transmission de données comprend en outre des moyens pour que l'accès au second service ne soit autorisé qu'aux trames IP en provenance du routeur proxy.

Un moyen de routage relié à un premier noeud et à un second noeud connectés entre eux au moyen de réseaux de communications, le premier noeud envoyant des données au second noeud selon deux adresses différentes, comporte un routeur proxy permettant auxdites données envoyées par le premier noeud selon lesdites deux adresses différentes d'être reçues par le second noeud sur une adresse réseau unique en empruntant deux chemins différents dont un chemin passe par le routeur proxy.

Ce moyen de routage peut comprendre en outre un moyen de comptage applicatif destiné à analyser les données empruntant le chemin passant par le routeur proxy.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 illustre un exemple très schématique d'un système de transmission d'informations entre un premier noeud et un second noeud connectés entre eux au moyen de réseaux de communications, selon l'invention ;
- la figure 2 montre un mode de réalisation du système de transmission d'informations de la figure 1 ;
- la figure 3 montre un exemple d'un procédé de transmission d'informations entre un client et un serveur selon le système de la figure 2;
- la figure 4 montre un autre mode de réalisation du système de transmission d'informations entre les premier et second noeuds, selon l'invention ;
- la figure 5 montre un système de transmission d'informations entre un client et plusieurs serveurs avec une seule adresse publique attribuée à un seul routeur proxy, selon l'invention ;
- la figure 6 montre un système de transmission d'informations selon la figure 2 comprenant un moyen de comptage applicatif ;
- la figure 7 montre un exemple d'un procédé de transmission d'informations entre un client et un serveur selon le système de la figure 6; et
- la figure 8 illustre un exemple très schématique d'un système de transmission d'informations entre un premier noeud et un second noeud connectés entre eux au moyen de réseaux de communications, selon l'art antérieur.

### Description détaillée de modes de réalisation

Conformément à l'invention, la figure 1 illustre un exemple très schématique d'un système de transmission d'informations entre un premier noeud 3 et un second noeud 5 connectés entre eux au moyen de réseaux de communications ou télécommunications 7 et 9.

Le système comprend un moyen de routage 11, relié aux premier et second noeuds, permettant à des flux ou données envoyés par le premier noeud 3 selon deux adresses différentes d'être reçus par le second noeud 5 sur une adresse réseau unique 17 en empruntant deux chemins différents 13a et 15a.

Bien entendu, le moyen de routage 11 permet aussi à des données envoyées par le second noeud 5 selon deux adresses différentes d'être reçues par le premier noeud 3 sur une adresse réseau unique 19 en empruntant deux chemins différents 13b et 15b.

Ceci permet au premier noeud 3 et/ou au second noeud 5 d'avoir une seule et simple connexion au réseau de communications 7. Il est alors suffisant pour chacun des premier et second noeuds 3 et 5 d'avoir une unique ligne physique 114 et 116 respectivement, pour l'accès à Internet.

Le procédé selon l'invention consiste alors à mettre en oeuvre une fonctionnalité de routage par URL dans un réseau de communications. Ainsi, les données ou flux entre le premier noeud 3 et le second noeud 5 sont routés sur une adresse réseau unique 17 ou 19 par des liens ou chemins 13 et 15 différents selon le nom du noeud défini dans l'URL de l'application.

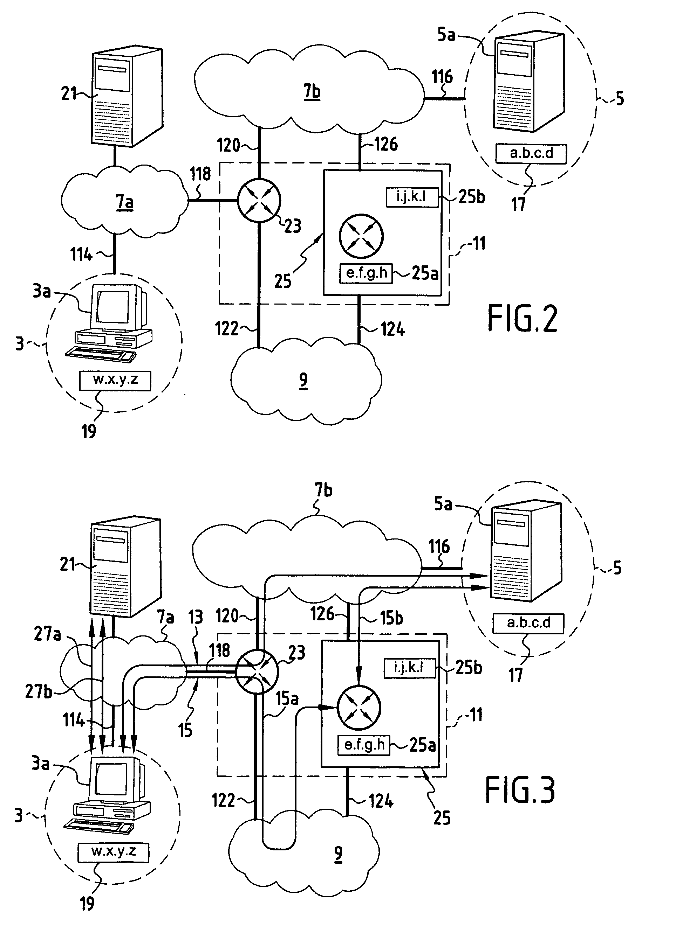

La figure 2 montre un mode de réalisation du système de transmission d'informations de la figure 1.

Selon cet exemple, les premier et second noeuds 3, 5 du système de transmission d'informations correspondent à un terminal 3a et un serveur 5a d'un ensemble client-serveur 3a-5a. En particulier, le premier noeud 3 correspond au terminal ou client 3a et le second noeud 5 correspond au serveur 5a.

Le client 3a et le serveur 5a sont connectés de façon simple par les connexions 114 et 116 à des réseaux de communications 7a et 7b du type IP et ne disposent chacun que d'une seule adresse IP 17, 19 dans le réseau auquel ils sont connectés. A titre d'exemple, le serveur 5a dispose de l'adresse réseau 17 (a.b.c.d) correspondant à une adresse URL.

Par ailleurs, les réseaux de communications 7a, 7b et 9 peuvent être des réseaux IP filaire ou sans fil, bas ou haut débit du type RTC, xDSL, WiFi, GPRS, satellite, câble, etc.

D'une manière générale, le système de transmission d'informations comprend aussi un serveur d'adressage par domaines 21 « DNS » assurant la traduction des noms de domaines des adresses URL utilisées par le client 3a de l'ensemble client-serveur.

Par ailleurs, le moyen de routage 11 comprend un routeur d'aiguillage 23 connecté aux réseaux 7a, 7b et 9 selon les connexions 118, 120, et 122 respectivement. Ce routeur d'aiguillage 23 est destiné à aiguiller les flux de données IP entre les réseaux 7a, 7b et 9 en fonction des adresses IP de destinations.

En outre, conformément à l'invention, le moyen de routage 11 comprend un routeur proxy 25 connecté aux premier et second noeuds 3 et 5 au moyen des réseaux de communications 7a, 7b et 9. Plus particulièrement, le routeur proxy 25 est connecté aux réseaux 9 et 7b par les connexions 124 et 126 respectivement et au réseau 7a par l'intermédiaire du routeur d'aiguillage 23. Ainsi, un des deux chemins, emprunté par les données circulant entre les premier et second noeuds 3 et 5, passe par le routeur proxy 25.

Alors, lorsque le client 3a ou premier noeud 3 envoie des données selon deux adresses réseaux différentes (par exemple les adresses nommées e.f.g..h et a.b.c.d), l'une des deux adresses (par exemple e.f.g.h), correspond à une première adresse 25a attribuée au routeur proxy 25, l'autre adresse (a.b.c.d) correspond à l'adresse réseau unique 17 du serveur 5a ou second noeud 5. Alors, lorsque l'adresse envoyée par le client 3a est celle du routeur proxy 25, c'est-à-dire l'adresse (e.f.g.h), les données transmises par le client 3a arrivent au serveur 5a selon un chemin qui passe par le routeur proxy 25 qui au passage échange sa première adresse réseau 25a avec l'adresse réseau unique 17 du serveur 5a selon une fonction de traduction d'adresses de réseau ou protocole « NAT/PAT » statique.

De même, lorsque le serveur 5a ou second noeud 5 envoie des données selon deux adresses différentes (par exemple les adresses nommées i.j.k.l et w.x.y.z), l'une des deux adresses (par exemple i.j.k.l) correspond à une seconde adresse réseau 25b attribuée au routeur proxy 25, l'autre adresse (w.x.y.z) correspond à l'adresse réseau unique 19 du client 3a ou premier noeud 3. Autrement dit, les données envoyées du premier noeud 3 au second noeud 5 empruntent un même chemin (voir chemins 13 et 15 des figures 1 et 3) que celles envoyées du second noeud 5 au premier noeud 3.

Le système de transmission d'informations de la figure 2 utilise des protocoles et des mécanismes simples et normalisés (DNS, routage IP et NAT/PAT) ainsi que des équipements traditionnels robustes et performants (DNS et routeur).

La figure 3 montre un exemple du procédé de transmission d'informations entre le client 3a et le serveur 5a selon le système de la figure 2.

Au premier lieu, le client 3a effectue une résolution (chemins 27a, 27b) de nom du serveur 5a auprès du serveur d'adressage par domaines « DNS » 21 de son fournisseur d'accès Internet « FAI » qui lui renvoie (chemin 27a) l'adresse réseau 17 (a.b.c.d) du serveur 5a ou (chemin 27b), l'adresse réseau 25a (e.f.g..h) du routeur proxy 25 correspondant au nom contenu dans l'URL utilisée dans l'application du client 3a et qui est opérationnellement associé au serveur 5a.

Si l'adresse renvoyée par le DNS 21 est l'adresse réelle 17 du serveur 5a, alors le client 3a et le serveur 5a, pour l'application et l'URL utilisée, vont communiquer directement entre eux selon le chemin 13 avec leurs adresses IP réelles (w.x.y.z pour le client 3a et a.b.c.d pour le serveur 5a).

En revanche, si l'adresse renvoyée par le DNS 21 est l'adresse du routeur proxy 25 (chemin 27b), alors le client 3a va établir la session avec le serveur 5a selon le chemin 15 passant par le routeur proxy 25. Au passage, le routeur proxy 25 modifie les flux IP qu'il route selon une fonction de NAT/PAT statique et/ou dynamique comme suit :
- NAT/PAT statique : l'adresse réseau 17 (a.b.c.d) du serveur 5a est échangée par la première adresse réseau 25a (e.f.g.h) du routeur proxy 25 et vice-versa (e.f.g.h ↔ a.b.c.d). La fonction NAT/PAT statique est une application bijective, c'est-à-dire un-pour-un entre l'adresse 17 du serveur 5a et la première adresse 25a du routeur proxy 25.
- NAT/PAT dynamique : l'adresse réseau 19 (w.x.y.z) du client 3a est échangée par la seconde adresse réseau 25b (i.j.k.l) du routeur proxy 25 et vice-versa (w.x.y.z ↔ i.j.k.l). La fonction NAT/PAT dynamique est une application surjective, c'est-à-dire N-pour-un entre par exemple N adresses 19 de N clients 3a et la seconde adresse 25b du routeur proxy 25.

Pour chaque URL, les paquets ou flux IP transmis du serveur 5a au client 3a utilisent alors le même chemin 13 ou 15 que ceux transmis du client 3a au serveur 5a. Les flux passant par différents chemins 13 et 15 du réseau sont donc symétriques.

On notera que, entre le client 3a et le routeur proxy 25, les flux IP (chemin 15a) contiennent l'adresse IP réelle 19 (w.x.y.z) du client 3a et l'adresse cachée (e.f.g.h) du serveur 5a. Par contre, entre le routeur proxy 25 et le serveur 5a, les flux IP (chemin 15b) contiennent l'adresse IP cachée (i.j.k.l) du client 3a et l'adresse réelle 17 (a.b.c.d) du serveur 5a.

Ainsi, le client 3a a l'impression de s'adresser à deux machines différentes alors qu'il s'agit du même serveur 5a au final. De même, le serveur 5a qui opère le service aura l'impression de servir deux clients distincts même s'il s'agit du même client 3a au final qui accède aux services via deux URL différentes.

On notera que la transmission de données entre les premier et second noeuds 3 et 5 peut emprunter une pluralité de chemins et n'est pas limitée à seulement deux chemins.

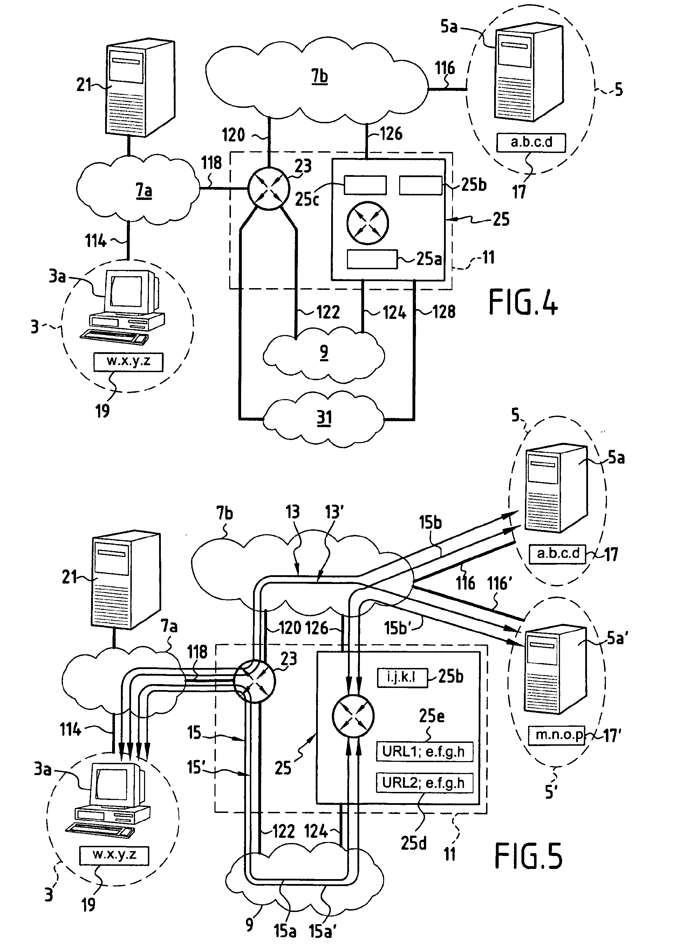

En effet, la figure 4 montre un autre mode de réalisation du système de transmission d'informations entre les premier et second noeuds 3 et 5, qui se distingue de celui de la figure 2 seulement par le fait que le routeur d'aiguillage 23 et le routeur proxy 25 sont connectés à un réseau de communications supplémentaire 31 permettant une transmission d'informations entre le client 3a et le serveur 5a selon un troisième chemin. Dans ce cas, trois adresses réseaux 25a, 25b, et 25c sont attribuées au routeur proxy 25.

Il est aussi envisageable que le système de transmission d'informations puisse comporter un routeur proxy supplémentaire pour chaque réseau de communications supplémentaire.

Avantageusement, il est aussi possible de couvrir plusieurs serveurs avec une seule adresse publique attribuée à un seul routeur proxy 25.

En effet, la figure 5 montre un système de transmission d'informations entre d'une part un premier noeud 3 correspondant à un client ou terminal 3a, et d'autre part un second noeud 5 correspondant à un premier serveur 5a et un autre second noeud 5' correspondant à un second serveur 5a'. Les serveurs 5a et 5a' sont connectés de façon simple par les connexions 116 et 116' au réseau de communication 7b et le terminal 3a est connecté de façon simple par la connexion 114 au réseau de communication 7a. Le terminal 3a dispose d'une seule adresse 19 et de même, chacun des premier et second serveurs 5a et 5a' ne disposent que d'une seule adresse IP 17 et 17 respectivement.

A titre d'exemple, le client 3a dispose de l'adresse réseau 19 correspondant à une adresse URL (w.x.y.z), le premier serveur 5a dispose de l'adresse réseau 17 correspondant à une adresse URL (a.b.c.d), et le second serveur 5a' dispose de l'adresse réseau 17 correspondant à une adresse URL (m.n.o.p).

Ainsi, lorsque le client 3a envoie des données selon l'adresse réseau réel (a.b.c.d) du premier serveur 5a, alors le client 3a et le premier serveur 5a vont communiquer directement entre eux selon le chemin 15.

De même, lorsque le client 3a envoie des données selon l'adresse réseau réel (m.n.o.p) du second serveur 5a', alors le client 3a et le second serveur 5a' vont communiquer directement entre eux selon le chemin 15'.

En revanche, lorsque le client 3a envoie des données selon l'adresse serveur attribuée au routeur proxy 25, alors le client 3a va établir la session avec le premier serveur 5a ou le second serveur 5a' selon le nom de domaine utilisé par le client 3a.

En effet, le routeur proxy 25 échange son adresse avec une adresse unique d'un serveur parmi les deux serveurs 5a et 5a' selon une fonction de NAT/PAT applicative qui associe pour chaque couple constitué d'un nom de domaine utilisé par le client 3a et de l'adresse attribuée au routeur proxy 25, une seule et unique adresse de serveur en fonction du nom de domaine. Autrement dit, la fonction de NAT/PAT applicative est une fonction bijective qui à chaque couple (URL, adresse IP serveur du routeur proxy) associe une seule et unique adresse IP de serveur. Cela permet ainsi de n'utiliser pour chaque serveur 5a, 5a' qu'une seule adresse IP publique (a.b.c.d ou m.n.o.p) en tant qu'adresse IP serveur.

En effet, l'adresse IP publique (e.f.g.h) attribuée au routeur proxy 25 suffit pour partager une pluralité de serveurs. Ainsi, d'une manière générale, le routeur proxy 25 peut échanger son adresse (e.f.g.h) avec une adresse unique d'un serveur parmi une pluralité de serveurs selon la fonction de NAT/PAT applicative permettant ainsi de partager le routeur proxy 25 par la pluralité de serveurs. Ainsi, le fait de mutualiser le routeur proxy 25 pour une pluralité de serveurs permet d'économiser une pluralité d'adresses IP publiques.

Conformément à l'exemple de la figure 5, lorsque le client 3a envoie des données selon l'adresse (e.f.g.h) attribuée au routeur proxy 25 en utilisant un premier nom de domaine URL1, c'est-à-dire selon le couple 25e (URL1 ; e.f.g.h) alors le client 3a va établir la session avec le premier serveur 5a selon le chemin 15 passant par le routeur proxy 25.

De même, lorsque le client 3a envoie des données selon l'adresse attribuée au routeur proxy 25 en utilisant un second nom de domaine URL2, c'est-à-dire selon le couple 25d (URL2 ; e.f.g.h) alors le client 3a va établir la session avec le second serveur 5'a selon le chemin 15' passant par le routeur proxy 25.

On notera que le procédé de transmission de données dans le sens inverse, c'est-à-dire depuis les serveurs 5a, 5a' vers le client 3a est identique à celui décrit précédemment en référence aux figures 2 et 3.

Le procédé selon l'invention permet alors de séparer deux ou plusieurs flux IP selon l'URL utilisée au niveau applicatif. Autrement dit, ce procédé permet d'extraire des flux applicatifs caractérisés par l'URL utilisée par l'ensemble client-serveur 3a-5a dans un flux IP brut échangé entre le client 3a et le serveur 5a.

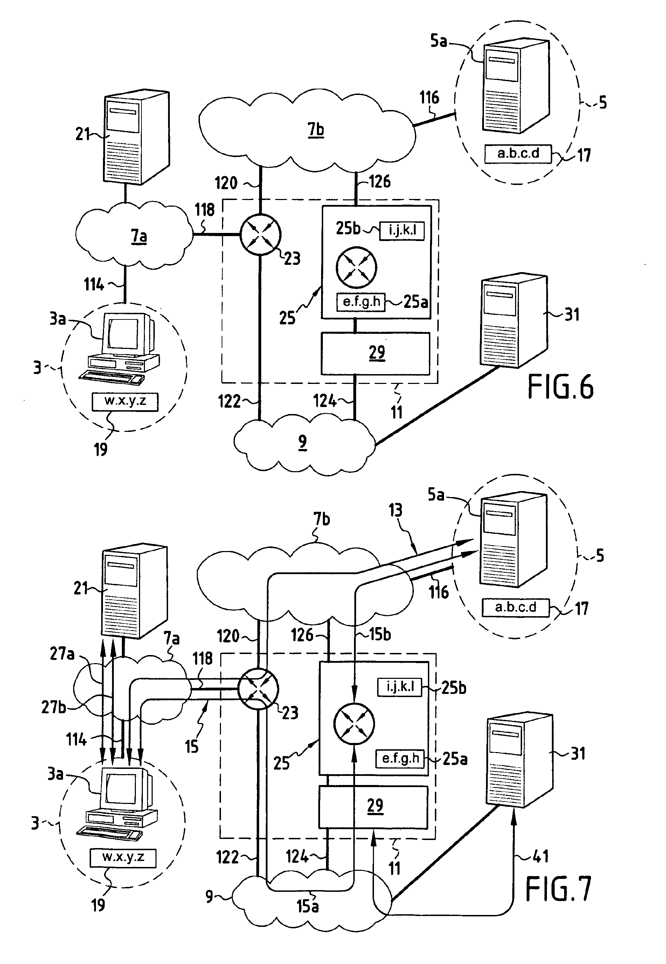

La figure 6 montre un système de transmission d'informations comprenant un moyen de comptage applicatif 29.

Ce moyen de comptage applicatif 29 est destiné à analyser les données empruntant le chemin 15 passant par le routeur proxy 25 et qui sont échangées entre les premier et second noeuds 3, 5 correspondant au terminal 3a et au serveur 5a de l'ensemble client-serveur.

Le moyen de routage 11 permet ainsi de router les données échangées entre un client 3a et un serveur 5a connectés à Internet et d'analyser uniquement celles qui passent par le routeur proxy 25 afin de les valoriser et/ou facturer.

Ce moyen de comptage applicatif 29 ou fonction de comptage applicative peut être mis en oeuvre sur le routeur d'aiguillage 23, sur le routeur proxy 25 ou sur un équipement situé entre ces deux routeurs d'aiguillage 23 et proxy 25.

En outre, le moyen de routage 11 comprenant la fonction de comptage applicative peut fonctionner avec tout type de protocole applicatif (par exemple HTTP, RTSP, MMS, FTP).

On notera que le client 3a, le serveur 5a, et le moyen de routage 11 peuvent être indépendamment localisés partout dans le monde.

Comme précédemment, le client 3a et le serveur 5a sont connectés au réseau Internet et disposent chacun d'une adresse IP publique routable 17, 19 (w.x.y.z pour le client 3a et a.b.c.d pour le serveur 5a).

Ainsi, le serveur d'adressage par domaines 21 du fournisseur d'accès Internet renvoie les adresses IP du serveur 5a et du routeur proxy 25 en fonction du nom de service qu'il lui est demandé de résoudre. Par exemple, pour un service gratuit, il renvoie l'adresse IP (a.b.c.d) du serveur 5a et pour un service payant, il renvoie l'adresse IP serveur (e.fg.h) du routeur proxy 25.

Le routeur d'aiguillage 23 permet d'extraire les flux IP du client 3a à destination du routeur proxy 25. Conformément à l'invention, le routeur proxy 25 possède deux interfaces avec chacune une adresse IP distincte 25a, 25b : l'adresse IP serveur (e.fg.h) du routeur proxy 25 est l'adresse IP que le client 3a ou l'internaute utilise sur les flux applicatifs (par exemple payants) avec le serveur 5a, et l'adresse IP client (i.j.k.l) est l'adresse avec laquelle le routeur proxy 25 cache au serveur 5a l'adresse réelle du client 3a qui consomme ce service payant. Le routeur proxy 25 route les flux IP entre le client 3a et le serveur 5a en appliquant dans chaque sens des fonctions de NAT/PAT statique sur l'adresse du serveur 5a (e.fg.h est échangé avec a.b.c.d) et de NAT/PAT dynamique sur l'adresse du client 3a (w.x.y.z est échangé avec i.j.k.l).

Ainsi, le serveur 5a propose ses services aux internautes ou clients 3a via deux serveurs virtuels opérant chacun sous un nom de domaine différent. Alors, l'accès au serveur virtuel gérant le domaine gratuit n'est pas filtré. Par contre, l'accès au serveur virtuel, gérant le domaine payant n'est autorisé qu'aux trames IP en provenance du routeur proxy 25 (adresse IP source i.j.k.l).

Le système de transmission d'informations comprend en outre un centre de gestion 31 destiné à recevoir des informations depuis le moyen de comptage concernant les données passant par le routeur proxy 25 afin de valoriser ces données et facturer en conséquence un client 3a de l'ensemble client-serveur.

La figure 7 montre un processus détaillé des applications du système de transmission d'informations de la figure 6. Selon une première application, le serveur 5a est un serveur multiservices proposant deux types de services.

A titre d'exemple, le premier service est un service gratuit de présentation d'informations générales sous un nom de domaine "www.mondomaine-gratuit.com" et le second service est un service payant de présentation d'informations particulières sous un nom de domaine "www.mondomaine-payant.com".

En premier lieu, l'internaute ou le client 3a se connecte à Internet pour accéder au service proposé par le fournisseur de service. Il effectue la résolution 27a de nom du serveur "www.mondomaine-gratuit.com" auprès du serveur d'adressage par domaines 21 de son fournisseur d'accès Internet qui lui renvoie l'adresse IP réelle (a.b.c.d.) du serveur 5a. L'internaute accède ainsi via le chemin 13 aux pages d'accueil publiques (par exemple présentation du service, conditions d'accès, visite de pages gratuites) du serveur 5a.

Le serveur 5a lui propose alors (chemin 13) d'accéder aux pages payantes caractérisées par une autre URL "www.mondomaine.payant.com". Le client 3a, souhaitant accéder à ces pages payantes, sélectionne la nouvelle URL et effectue donc une nouvelle résolution 27b de nom auprès du serveur d'adressage par domaines 21 de son fournisseur d'accès Internet qui lui renvoie l'adresse IP serveur (e.fg.h) du routeur proxy 25. Les flux IP du client 3a vont donc être dirigés selon le chemin 15 jusqu'au serveur 5a via le routeur proxy 25 qui va, dans les trames IP, échanger son adresse IP serveur avec la véritable adresse IP du serveur 5a (e.fg.h ↔ a.b.c.d) et échanger la véritable adresse IP du client 3a avec sa propre adresse IP client (w.x.y.z ↔ i j.k.l).

Entre le client 3a et le routeur proxy 25, les flux IP empruntant le chemin 15a, contiennent l'adresse IP réelle (w.x.y.z) du client 3a et l'adresse cachée (e.f.g.h) du serveur 5a. Entre le routeur proxy 25 et le serveur 5a, les flux IP empruntant le chemin 15b, contiennent l'adresse IP cachée (i.j.k.l) du client 3a et l'adresse réelle (a.b.c.d) du serveur 5a.

Le chemin 15 passe ainsi par le moyen de comptage applicatif 29 qui examine les flux applicatifs concernant les informations particulières utilisées par le client 3a de l'ensemble client-serveur et envoie (chemin 41) au centre de gestion 31 des tickets de comptage permettant ainsi de facturer ce client 3a.

Le moyen de comptage applicatif 29 permet de faire du comptage à l'acte, à la durée et au volume permettant ainsi de réaliser une facturation très souple. De plus, il permet de vérifier si le service a bien été correctement rendu au client et constitue un tiers de confiance en cas de litige entre le fournisseur de service et le client.

En outre, le moyen de routage 11 avec un moyen de comptage applicatif 29 n'a pas besoin d'être surdimensionné en terme de performance d'analyse applicative car il n'est pas nécessaire d'analyser tous les flux entre les clients 3a et le serveur 5a mais seulement ceux transitant par le chemin 15 passant par le moyen de routage 11.

A titre d'exemple, le premier service du serveur 5a peut être un service web (protocole HTTP) pour la présentation d'un catalogue de morceaux de musique ou vidéos sous l'URL "www.catalogue-videos.com" (chemins 27a, 13).

Le second service peut être un service de lecture en transit "streaming" de morceaux de musique ou vidéos (par exemple protocole RTSP, MMS) via l'URL "streaming.catalogue-videos.com" (chemins 27b, 15). Les flux de "streaming" vidéo passent par le moyen de comptage 29 qui va totaliser la durée pendant laquelle le client 3a a utilisé ce service, et envoyer le ticket de comptage au centre de gestion 31 pour valorisation et facturation au client.

Avantageusement, les flux de "streaming" vidéo peuvent passer par un dorsal IP pour lequel la qualité de service est garantie, contrairement au dorsal global Internet sans garantie de qualité de service.

Selon un autre exemple, le premier service du serveur 5a peut être un service gratuit concernant la météo pouvant être accédé par le client 3a de manière traditionnelle via le réseau Internet sous l'URL "www.mameteogratuit.com" (chemins 27a, 13).

Sous un autre URL "www.mameteopayant.com" le même serveur 5a propose également au client 3a un second service concernant des prévisions plus précises dans le temps et sur un lieu choisi par le client 3a.

Le moyen de comptage applicatif 29 peut vérifier que le service (obtention des prévisions météo précises) a bien été rendu au client 3a et envoie un ticket au centre de gestion 31 pour valorisation du ticket et sa facturation auprès du client 3a (chemins 27b, 15).

Selon encore un autre exemple, il est possible pour un fournisseur de vendre des biens par Internet que le fournisseur d'accès Internet (FAI) facturera au client.

D'abord, le client 3a accède au service gratuit de manière traditionnelle par le réseau Internet via l'URL "www.mesachats-public.com", et choisit ses produits (chemins 27a, 13).

Ensuite, via l'URL "www.mesachats-commande.com", le même serveur 5a permet de saisir les éléments de la commande du client 3a et de la valider (chemins 27b, 15).

Le moyen de comptage applicatif 29 analyse alors les requêtes HTTP et en extrait les informations nécessaires à la facturation du client (montant, vendeur, date, etc.).

Finalement, le FAI facture à l'internaute le montant des biens vendus et reverse au vendeur de biens le montant de sa facture diminué d'une commission de facturation.

Selon une seconde application, le serveur 5a est un serveur multiservices proposant un premier service présentant des données accessibles au public (chemin 13), et un second service présentant des données sécurisées (chemin 15) restreint à un groupe déterminé de clients ou d'utilisateurs.

Dans ce cas, le moyen de comptage applicatif 29 quantifie les données sécurisées utilisées par chaque client de ce groupe déterminé de clients.

Ainsi, le système de transmission d'informations selon l'invention peut être utilisé dans tous les cas où un même serveur est destiné à rendre plusieurs services via des réseaux distincts.

## Revendications

1. Procédé de transmission de données entre un terminal client (3a) et un serveur (5a) connectés entre eux au moyen de réseaux de communications (7, 9),
ledit procédé étant **caractérisé en ce que** ledit serveur (5a) propose au moins un premier et un second services, et **en ce que** :
- lorsque ledit terminal client (3a) accède audit premier service, ledit terminal client (3a) envoie des données audit serveur (5a) selon une première adresse ; et
- lorsque ledit terminal client (3a) accède audit second service, ledit terminal client (3a) envoie des données audit serveur (5a) selon une seconde adresse ;
les données envoyées selon ladite première adresse et les données envoyées selon ladite seconde adresse empruntant deux chemins différents (13,15) vers une adresse réseau unique (17) dudit serveur (5a) et la seconde adresse cachant ladite adresse réseau unique (17) dudit serveur (5a) audit terminal client (3a).

2. Procédé selon la revendication 1, **caractérisé en ce que** l'une desdites deux adresses correspond à l'adresse réseau unique (17,19) du serveur (5a), l'autre adresse correspondant à une adresse (25a) attribuée à un routeur proxy (25) connecté audit terminal client (3a) et audit serveur (5a) de sorte qu'un des deux chemins (13, 15) passe par le routeur proxy (25).

3. Procédé selon la revendication 2, **caractérisé en ce que** l'adresse attribuée au routeur proxy (25) est échangée avec l'adresse unique dudit serveur (5a) selon une fonction de NAT/PAT statique et/ou dynamique.

4. Procédé selon l'une quelconque des revendications 1 à 3, **caractérisé en ce que** les données envoyées dudit terminal client (3a) audit serveur (5a) empruntent un même chemin (13, 15) que celles envoyées dudit serveur (5a) audit terminal client (3a).

5. Procédé selon la revendication 2, **caractérisé en ce que** l'adresse attribuée au routeur proxy (25) est échangée avec une adresse unique d'un serveur parmi une pluralité de serveurs selon une fonction de NAT/PAT applicative permettant de partager le routeur proxy par la pluralité de serveurs.

6. Procédé selon l'une quelconque des revendications 2 à 5, **caractérisé en ce que** les données échangées entre ledit terminal client (3a) et ledit serveur (5a) et empruntant le chemin (15) passant par le routeur proxy (25) sont en outre analysées selon une fonction de comptage applicative permettant ainsi de valoriser lesdites données.

7. Procédé selon l'une quelconque des revendications 2 à 6, **caractérisé en ce que** l'accès audit second service n'est autorisé qu'aux trames IP en provenance dudit routeur proxy (25).

8. Système de transmission de données entre un terminal client (3a) et un serveur (5a) connectés entre eux au moyen de réseaux de communications (7, 9),
ledit système de transmission étant **caractérisé en ce que :**
- ledit serveur (5a) comprend des moyens pour proposer au moins un premier et un second services ;
- ledit terminal client (3a) comprend :
○ des moyens pour accéder audit premier service ;
○ des moyens pour accéder audit second service ;
○ des moyens pour envoyer des données audit serveur (5a) selon une première adresse lorsque ledit terminal client (3a) accède audit premier service ; et
○ des moyens pour envoyer des données audit serveur (5a) selon une seconde adresse lorsque ledit terminal client (3a) accède audit second service ;
et **en ce qu'**il comporte un dispositif de routage (11) permettant auxdites données envoyées selon ladite première adresse et auxdites données envoyées selon ladite seconde adresse d'être reçues sur une adresse réseau unique (17) dudit serveur (5a) en empruntant deux chemins différents (13,15), l'adresse réseau unique dudit serveur étant cachée au terminal client par ladite seconde adresse.

9. Système selon la revendication 8, **caractérisé en ce que** ledit dispositif de routage (11) comprend un routeur proxy (25) connecté audit terminal client (3a) et audit serveur (5a) de manière à ce que l'une desdites deux adresses corresponde à une adresse (25a) attribuée au routeur proxy (25) de sorte qu'un des deux chemins (15) passe par le routeur proxy (25), l'autre adresse étant ladite adresse réseau unique (17) dudit serveur (5a).

10. Système selon l'une quelconque des revendications 8 et 9, **caractérisé en ce que** ledit dispositif de routage (11) comprend en outre un moyen de comptage applicatif (29) destiné à analyser les données échangées entre ledit terminal client (3a) et ledit serveur (5a) et empruntant le chemin (15) passant par le routeur proxy permettant ainsi de valoriser lesdites données.

11. Système selon la revendication 10, **caractérisé en ce qu'**il comprend en outre un centre de gestion (31) destiné à recevoir des informations depuis ledit moyen de comptage applicatif (29) concernant les données passant par le routeur proxy (25) afin de valoriser ces données et facturer en conséquence un client (3a) de l'ensemble client-serveur.

12. Système selon l'une quelconque des revendications 8 à 11, **caractérisé en ce que** ledit dispositif de routage (11) comprend en outre un routeur d'aiguillage (23) destiné à aiguiller les flux de données entre les réseaux de communications en fonction des adresses de destination.

13. Système selon l'une quelconque des revendications 9 à 12 **caractérisé en ce qu'**il comprend en outre des moyens pour que l'accès au second service ne soit autorisé qu'aux trames IP en provenance dudit routeur proxy (25).

## Claims

1. Method for transmitting data between a client terminal (3a) and a server (5a) connected together by means of communication networks (7, 9)
said method being **characterized in that** said server (5a) proposes at least a first and a second services, and **in that**:
- when said client terminal (3a) accesses said first service, said client terminal (3a) sends data to said server (5a) according to a first address; and
- when said client terminal (3a) accesses said second service, said client terminal (3a) sends data to said server (5a) according to a second address;
the data sent according to said first address and the data sent according to said second address using two different paths (13, 15) to a unique network address (17) of said server (5a) and the second address hiding said unique network address (17) from said server (5a) to said client terminal (3a).

2. Method according to Claim 1, **characterized in that** one of said two addresses corresponds to the unique network address (17, 19) of the server (5a), the other address corresponding to an address (25a) allocated to a proxy router (25) connected to said client terminal (3a) and to said server (5a) so that one of the two paths (13, 15) passes through the proxy router (25).

3. Method according to Claim 2, **characterized in that** the address allocated to the proxy router (25) is exchanged with the unique address of said server (5a) according to a static and/or dynamic NAT/PAT function.

4. Method according to any one of Claims 1 to 3, **characterized in that** the data sent from said client terminal (3a) to said server (5a) use one and the same path (13, 15) as those sent from said server (5a) to said client terminal (3a).

5. Method according to Claim 2, **characterized in that** the address allocated to the proxy router (25) is exchanged with a unique address of one server out of a plurality of servers according to an application NAT/PAT function making it possible for the proxy router to be shared by the plurality of servers.

6. Method according to any one of Claims 2 to 5, **characterized in that** the data exchanged between said client terminal (3a) and said server (5a) and using the path (15) passing through the proxy router (25) are also analysed according to an application counting function thus making it possible to put a value on said data.

7. Method according to any one of Claims 2 to 6, **characterized in that** access to said second service is allowed only to IP frames originating from said proxy router (25).

8. System for transmitting data between a client terminal (3a) and a server (5a) connected together by means of communication networks (7, 9),
said transmission system being **characterized in that**:
- said server (5a) comprises means for proposing at least a first and a second services;
- said client terminal (3a) comprises:
○ means for accessing said first service;
○ means for accessing said second service;
○ means for sending data to said server (5a) according to a first address when said client terminal (3a) accesses said first service; and
○ means for sending data to said server (5a) according to a second address when said client terminal (3a) accesses said second service;
and **in that** it comprises a routing device (11) allowing said data sent according to said first address and said data sent according to said second address to be received at a unique network address (17) of said server (5a) while using two different paths (13, 15), the unique network address of said server being hidden from the client terminal by said second address.

9. System according to Claim 8, **characterized in that** said routing device (11) comprises a proxy router (25) connected to said client terminal (3a) and to said server (5a) so that one of said two addresses corresponds to an address (25a) allocated to the proxy router (25) so that one of the two paths (15) passes through the proxy router (25), the other address being said unique network address (17) of said server (5a).

10. System according to either one of Claims 8 and 9, **characterized in that** said routing device (11) also comprises an application counting means (29) designed to analyse the data exchanged between said client terminal (3a) and said server (5a) and using the path (15) passing through the proxy router thus making it possible to put a value on said data.

11. System according to Claim 10, **characterized in that** it also comprises a management centre (31) designed to receive information from said application counting means (29) concerning the data passing through the proxy router (25) in order to put a value on these data and invoice in consequence a client (3a) of the client-server assembly.

12. System according to any one of Claims 8 to 11, **characterized in that** said routing device (11) also comprises a switching router (23) designed to switch the data streams between the communication networks according to the destination addresses.

13. System according to any one of Claims 9 to 12, **characterized in that** it also comprises means so that access to the second service is allowed only to the IP frames originating from said proxy router (25).

## Patentansprüche

1. Verfahren zur Datenübertragung zwischen einem Client-Endgerät (3a) und einem Server (5a), die über Kommunikationsnetze (7, 9) miteinander verbunden sind, wobei das Verfahren **dadurch gekennzeichnet ist, dass** der Server (5a) mindestens einen ersten und einen zweiten Dienst anbietet, und dass:
- wenn das Client-Endgerät (3a) auf den ersten Dienst zugreift, das Client-Endgerät (3a) Daten an den Server (5a) gemäß einer ersten Adresse sendet; und
- wenn das Client-Endgerät (3a) auf den zweiten Dienst zugreift, das Client-Endgerät (3a) Daten an den Server (5a) gemäß einer zweiten Adresse sendet;
wobei die gemäß der ersten Adresse gesendeten Daten und die gemäß der zweiten Adresse gesendeten Daten über zwei unterschiedliche Pfade (13, 15) zu einer einzigen Netzadresse (17) des Servers (5a) gehen, und die zweite Adresse die einzige Netzadresse (17) des Servers (5a) vor dem Client-Endgerät (3a) verbirgt.

2. Verfahren nach Anspruch 1, **dadurch gekennzeichnet, dass** eine der zwei Adressen der einzigen Netzadresse (17, 19) des Servers (5a) entspricht, während die andere Adresse einer Adresse (25a) entspricht, die einem Proxy-Router (25) zugeordnet ist, der so mit dem Client-Endgerät (3a) und mit dem Server (5a) verbunden ist, dass einer der zwei Pfade (13, 15) über den Proxy-Router (25) geht.

3. Verfahren nach Anspruch 2, **dadurch gekennzeichnet, dass** die dem Proxy-Router (25) zugeteilte Adresse mit der einzigen Adresse des Servers (5a) gemäß einer statischen und/oder dynamischen Funktion von NAT/PAT getauscht wird.

4. Verfahren nach einem der Ansprüche 1 bis 3, **dadurch gekennzeichnet, dass** die vom Client-Endgerät (3a) an den Server (5a) gesendeten Daten über den gleichen Pfad (13, 15) gehen wie diejenigen, die vom Server (5a) an das Client-Endgerät (3a) gesendet werden.

5. Verfahren nach Anspruch 2, **dadurch gekennzeichnet, dass** die dem Proxy-Router (25) zugeteilte Adresse mit einer einzigen Adresse eines Servers unter mehreren Servern gemäß einer applikativen Funktion von NAT/PAT ausgetauscht wird, was es ermöglicht, den Proxy-Router durch die mehreren Server gemeinsam zu nutzen.

6. Verfahren nach einem der Ansprüche 2 bis 5, **dadurch gekennzeichnet, dass** die zwischen dem Client-Endgerät (3a) und dem Server (5a) ausgetauschten und über den Proxy-Router (25) verlaufenden Pfad (15) gehenden Daten außerdem gemäß einer applikativen Zählfunktion analysiert werden, was es ermöglicht, die Daten zu verwerten.

7. Verfahren nach einem der Ansprüche 2 bis 6, **dadurch gekennzeichnet, dass** der Zugriff auf den zweiten Dienst nur den vom Proxy-Router (25) kommenden IP-Rahmen erlaubt ist.

8. System zur Datenübertragung zwischen einem Client-Endgerät (3a) und einem Server (5a), die über Kommunikationsnetze (7, 9) miteinander verbunden sind, wobei das Übertragungssystem **dadurch gekennzeichnet ist, dass**:
- der Server (5a) Einrichtungen enthält, um mindestens einen ersten und einen zweiten Dienst anzubieten;
- das Client-Endgerät (3a) enthält:
○ Einrichtungen, um auf den ersten Dienst zuzugreifen;
○ Einrichtungen, um auf den zweiten Dienst zuzugreifen;
○ Einrichtungen, um Daten an den Server (5a) gemäß einer ersten Adresse zu senden, wenn das Client-Endgerät (3a) auf den ersten Dienst zugreift; und
○ Einrichtungen, um Daten an den Server (5a) gemäß einer zweiten Adresse zu senden, wenn das Client-Endgerät (3a) auf den zweiten Dienst zugreift;
und dass es eine Routing-Vorrichtung (11) aufweist, die es den gemäß der ersten Adresse gesendeten Daten und
den gemäß der zweiten Adresse gesendeten Daten ermöglicht, an einer einzigen Netzadresse (17) des Servers (5a) empfangen zu werden, indem sie über zwei verschiedene Pfade (13, 15} gehen, wobei die einzige Netzadresse des Servers vor dem Client-Endgerät durch die zweite Adresse verborgen wird.

9. System nach Anspruch 8, **dadurch gekennzeichnet, dass** die Routing-Vorrichtung (11) einen Proxy-Router (25) enthält, der mit dem Client-Endgerät (3a) und mit dem Server (5a) so verbunden ist, dass eine der zwei Adressen einer dem Proxy-Router (25) zugeteilten Adresse (25a) entspricht, so dass einer der zwei Pfade (15) über den Proxy-Router (25) geht, während die andere Adresse die einzige Netzadresse (17) des Servers (5a) ist.

10. System nach einem der Ansprüche 8 und 9, **dadurch gekennzeichnet, dass** die Routing-Vorrichtung (11) außerdem eine applikative Zähleinrichtung (29) enthält, die dazu bestimmt ist, die zwischen dem Client-Endgerät (3a) und dem Server (5a) ausgetauschten und über den über den Proxy-Router verlaufenden Pfad (15) gehenden Daten zu analysieren, wodurch es ermöglicht wird, die Daten zu verwerten.

11. System nach Anspruch 10, **dadurch gekennzeichnet, dass** es außerdem ein Verwaltungszentrum (31) enthält, das dazu bestimmt ist, Informationen von der applikativen Zähleinrichtung (29) betreffend die über den Proxy-Router (25) gehenden Daten zu empfangen, um diese Daten zu verwerten und dementsprechend einem Client (3a) der Client-Server-Einheit in Rechnung zu stellen.

12. System nach einem der Ansprüche 8 bis 11, **dadurch gekennzeichnet, dass** die Routing-Vorrichtung (11) außerdem einen Verzweigungsrouter (23) enthält, der dazu bestimmt ist, die Datenströme zwischen den Kommunikationsnetzen in Abhängigkeit von den Bestimmungsadressen zu lenken.

13. System nach einem der Ansprüche 9 bis 12, **dadurch gekennzeichnet, dass** es außerdem Einrichtungen enthält, damit der Zugriff auf den zweiten Dienst nur den vom Proxy-Router (25) kommenden IP-Rahmen erlaubt wird.
